# EUROPÄISCHE PATENTSCHRIFT

(11) **EP 1 050 431 B1**
(45) Veröffentlichungstag und Bekanntmachung des Hinweises auf die Patenterteilung: **24.03.2004**
(21) Anmeldenummer: 00109316.0
(22) Anmeldetag: 29.04.2000
(51) Int. Cl.: B60Q 1/04

(54) **Ausrichtvorrichtung zum Einpassen eines Kraftfahrzeugscheinwerfers in einen Karosserieausschnitt**
Alignment device for positioning a headlamp in a vehicle body opening
Dispositif de positionnement d'un phare dans une ouverture de la carosserie d'un véhicule

(30) Priorität: 05.05.1999 DE 19920521
(43) Veröffentlichungstag der Anmeldung: 08.11.2000
(73) Patentinhaber: DaimlerChrysler AG, 70567 Stuttgart (DE)
(72) Erfinder: Artner, Bernd, 71272 Renningen (DE); Baur, Eberhard K., 72108 Rottenburg (DE); Krüger, Jan, 70182 Stuttgart (DE); Oravetz, Josef, 71069 Sindelfingen (DE)

(56) Entgegenhaltungen:
- EP-B- 0 463 483
- DE-A- 3 718 841
- DE-C- 4 340 306

## Beschreibung

Die Erfindung betrifft eine Ausrichtvorrichtung zum Einpassen eines Kraftfahrzeugscheinwerfers in einen Karosserieausschnitt, der von Karosserieaußenhautteilen gebildet wird, die an einem Karosserieträger befestigt sind.

Insbesondere bei Personenkraftfahrzeugen wird der Karosserieausschnitt zur Aufnahme des Frontscheinwerfers üblicherweise von einem Kotflügel, einem Stoßfänger und einer Motorhaube gebildet. Zwischen der Streuscheibe des eingepaßten Frontscheinwerfers und den genannten Karosserieaußenhautteilen verbleibt meist ein umlaufender Spalt, der aufgrund seiner exponierten Lage von außen deutlich sichtbar ist. Paßungenauigkeiten in diesem Bereich fallen besonders auf, da sie zu einer visuell leicht erfaßbaren Ungleichmäßigkeit der Spaltbreite führen. Es sind daher Ausrichtvorrichtungen entwickelt worden, mit deren Hilfe sich der Kraftfahrzeugscheinwerfer in dem Karosserieausschnitt manuell so ausrichten läßt, daß der umlaufende Spalt eine im wesentliche gleichmäßige Breite hat.

Die Positionierung des Kraftfahrzeugscheinwerfers im Karosserieausschnitt erfolgt üblicherweise so, daß man den Kraftfahrzeugscheinwerfer mit Hilfe von geeigneten Verstellelementen gegenüber den Karosserieaußenhautteilen ausrichtet. Aus der DE-C1-43 40 306 ist beispielsweise ein solches, gattungsgemäßes Verstellelement bekannt. Das Verstellelement stellt hier eine justierbare Verbindung zwischen dem Gehäuse des Kraftfahrzeugscheinwerfers und einem Blechabschnitt her, der starr mit den Karosserieaußenhautteilen verbunden ist. Mit Hilfe des Verstellelements läßt sich auf diese Weise der Kraftfahrzeugscheinwerfer relativ zur den Karosserieaußenhautteilen ausrichten. Die Schwierigkeit bei Ausrichtvorrichtungen dieser Art besteht darin, daß der Kraftfahrzeugscheinwerfer in allen drei Raumrichtungen gleichzeitig positioniert und anschließend befestigt werden muß. Eine einzelne Person ist mit dieser Aufgabe oft überfordert, da gleichzeitig der Kraftfahrzeugscheinwerfer gehalten, gegebenenfalls bewegt und von der Frontseite her beobachtet werden muß. Entsprechend hoch sind die Kosten, die die Ausrichtung bei der Kraftfahrzeugendmontage verursacht.

Aus der EP-B1-0 463 483 ist eine Ausrichtvorrichtung bekannt, die am Gehäuse des Kraftfahrzeugscheinwerfers befestigte Haltelaschen umfaßt. An den Karosserieaußenhautteilen sind Anschläge vorgesehen, an die die Laschen beim Einsetzen des Kraftfahrzeugscheinwerfers in den Karosserieausschnitt anschlagen. In dieser Position werden die Laschen mit den Karosserieaußenhautteilen verschraubt. Bei diesem Vorgang werden die Paßungenauigkeiten dadurch ausgeglichen, daß die Karosserieaußenhautteile geringfügig in Richtung des Gehäuse des Kraftfahrzeugscheinwerfers gebogen werden, denn letzteres ist weitgehend unverformbar. Die Ausrichtung mit dieser bekannten Ausrichtvorrichtung ist sehr einfach und zügig durchführbar.

Bei beiden bekannten Ausrichtvorrichtungen ist der Kraftfahrzeugscheinwerfer unmittelbar an den Karosserieaußenhautteilen befestigt. Dies hat den Nachteil, daß selbst bei einer geringfügigen Verformung eines Karosserieaußenhautteils, etwa in Folge eines leichten Auffahrunfalls, der Kraftfahrzeugscheinwerfer so aus seiner Sollposition gebracht wird, daß die Leuchten nicht mehr in der vorgeschriebenen Weise einstellbar sind. Der Nutzer des Kraftfahrzeugs ist folglich gezwungen, einen solchen Schaden umgehend zu beheben.

Es stellt sich daher die Aufgabe, eine gattungsgemäße Ausrichtvorrichtung anzugeben, mit der sich mit geringem Aufwand ein gleichmäßig breiter Spalt zwischen dem Kraftfahrzeugscheinwerfer einerseits und den Karosserieaußenhautteilen andererseits einstellen läßt. Eine Verformung der Karosserieaußenhautteile soll sich auf die Position des Kraftfahrzeugscheinwerfers möglichst wenig auswirken.

Die Erfindung löst diese Aufgabe durch Bereitstellen einer Ausrichtvorrichtung mit den Merkmalen des Anspruchs 1. Die Ausrichtvorrichtung umfaßt erste Mittel zum starren Befestigen des Kraftfahrzeugscheinwerfers an einem Karosserieträger und zweite Mittel zum Ausrichten der Karosserieteile gegenüber dem Karosserieträger. Sie beruht somit auf einem anderen Prinzip der Ausrichtung, denn im Gegensatz zu bekannten Ausrichtvorrichtungen wird der Kraftfahrzeugscheinwerfer nicht gegenüber den Karosserieaußenhauteilen, sondern es werden diese vielmehr gegenüber dem Kraftfahrzeugscheinwerfer ausgerichtet. Da der Kraftfahrzeugscheinwerfer starr mit dem Karosserieträger verbunden ist, bleibt seine Position bei einer leichten Beschädigung der Karosserieaußenhautteile unverändert. Zudem ergeben sich erhebliche fertigungstechnische Vorteile, da nun nicht mehr der Kraftfahrzeugscheinwerfer in drei Raumrichtungen gleichzeitig ausgerichtet zu werden braucht. Statt dessen können die Karosserieaußenhautteile nach und nach gegenüber dem Kraftfahrzeugscheinwerfer ausgerichtet werden.

Bei einer Ausgestaltung nach Anspruch 2 umfassen die zweiten Mittel einen karosseriefesten Führungskörper und einen darauf aufgeschraubten hohlzylindrischen Verstellkörper. Dem Verstellkörper sind Führungsmittel zugeordnet, die eine aus einem Verdrehen des Verstellkörpers auf dem Führungskörper resultierende Axialbewegung des Verstellkörpers auf das wenigstens eine Karosserieaußenhautteil übertragen. Diese konstruktiv einfache Ausgestaltung der Ausrichtvorrichtung ermöglicht es, allein durch Verdrehen des Verstellkörpers die Ausrichtung vorzunehmen. Ein Lösen von Befestigungselementen ist hierzu nicht erforderlich.

Vorzugsweise umfassen die Führungsmittel gemäß Anspruch 3 eine auf dem Umfang des Verstellkörpers umlaufende Nut und einen Vorsprung, der in die Nut eingreift und starr mit dem wenigstens einen Karosserieaußenhautteil verbunden ist. Bei entsprechender Dimensionierung der Nut lassen sich auf diese Weise auch größere Verstellkräfte übertragen.

In einer Ausgestaltung nach Anspruch 4 ist der Verstellkörper mit radial nach außen weisenden Stegen versehen, die das Verstellen des Verstellkörpers erleichtern. Diese Ausgestaltung ist insbesondere dann vorteilhaft, wenn die Ausrichtvorrichtung an einem schwer zugänglichem Ort im Frontbereich des Kraftfahrzeugs angeordnet ist. Die Stege dienen als Anschlag für einen länglichen Gegenstand, etwa einen Schraubenzieher. Um den Verstellkörper auf dem Führungskörper zu verdrehen, wird der Gegenstand in annähernd tangentialer Richtung gegen die Stege gedrückt. Somit braucht die Ausrichtvorrichtung nur über einen schmalen Spalt von außen erreichbar zu sein.

Bei einer vorteilhaften Ausgestaltung nach Anspruch 5 umfassen die ersten Mittel eine mit dem Gehäuse des Kraftfahrzeugscheinwerfers starr verbundene Buchse und eine darin eingeschraubte Schraube. Zwischen dem Kopf der Schraube und der zugewandten Stirnseite der Buchse ist der Führungskörper und ein karosseriefestes Teil eingespannt. Der Kraftfahrzeugscheinwerfer und der Führungskörper sind somit gemeinsam mit nur einer Schraube an dem Karosserieträger befestigt. Vorzugsweise ist der Führungskörper nach Anspruch 6 zweiteilig aufgebaut und umfaßt ein Innenteil aus einem Metall, welches die durch das Verspannen durch die Schraube entstehenden Kräfte aufnimmt, und ein Außenteil aus einem Kunststoff, auf dem der Verstellkörper aufsitzt.

Bei einer weiteren vorteilhaften Ausgestaltung nach Anspruch 7 sind zwei Karosserieaußenhautteile im Bereich des Kraftfahrzeugscheinwerfers so miteinander verbunden, daß sie durch eine Ausrichtvorrichtung gemeinsam ausrichtbar sind. Es genügt somit, beide Teile gemeinsam in Fahrzeugquerrichtung geringfügig zu verschieben, um eine gleichmäßige Spaltbreite zu erzielen.

Ein vorteilhaftes Ausführungsbeispiel wird nachfolgend anhand der Zeichnungen erläutert, von denen zeigen:
- Fig. 1: eine vereinfachte Darstellung eines Kraftfahrzeugscheinwerfers in einem Karosserieausschnitt,
- Fig. 2: eine erfindungsgemäße Ausrichtvorrichtung in einem Längsschnitt, und
- Fig. 3: einen Schnitt durch eine Ausrichtvorrichtung nach Fig. 1 entlang der Schnittlinie A.

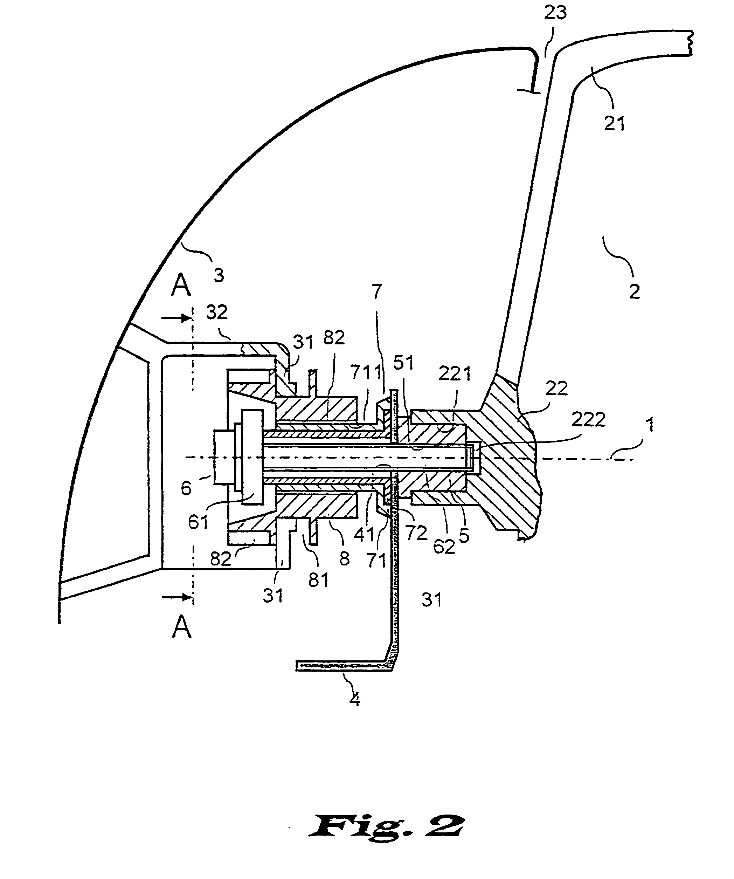

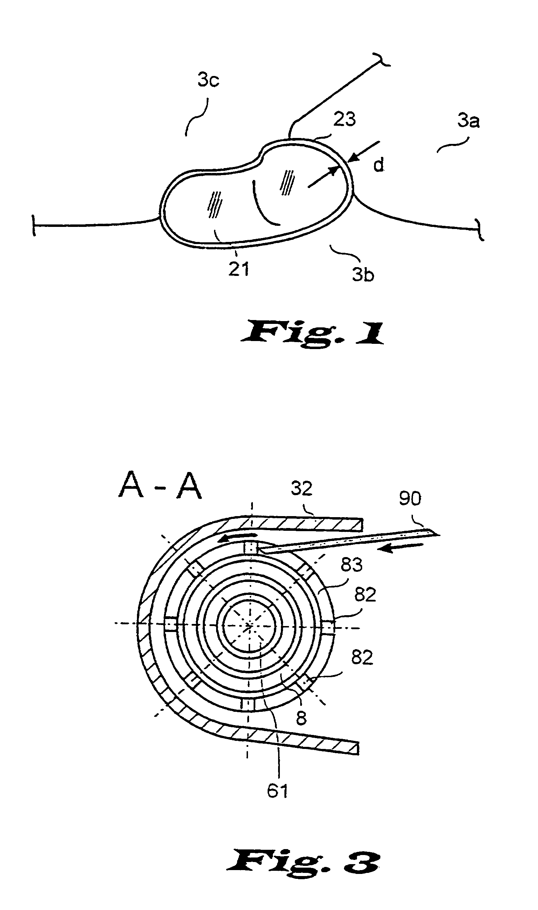

Fig. 1 zeigt in einer vereinfachten Darstellung einen Ausschnitt aus einer Kraftfahrzeugfront. Zu erkennen ist die Streuscheibe 21 eines Kraftfahrzeugscheinwerfers, der in einem von Karosserieaußenhautteilen gebildeten Karosserieausschnitt eingepaßt ist. Bei den Karosserieaußenhautteilen handelt es sich im einzelnen um einen Kotflügel 3a, einen Stoßfänger 3b und eine Motorhaube 3c. Zwischen den Karosserieaußenhautteilen und der Streuscheibe 21 des Kraftfahrzeugscheinwerfers verbleibt ein umlaufender Spalt 23, der aufgrund seiner exponierten Lage von außen deutlich sichtbar ist.

Fig. 2 zeigt einen Kraftfahrzeugscheinwerfer 2, von dem nur jeweils ein Teil der Streuscheibe 21 und des Scheinwerfergehäuses 22 dargestellt sind. Links neben der Streuscheibe 21 ist eines der in Fig. 1 gezeigten Karosserieaußenhautteile 3 erkennbar. Der Spalt 23 zwischen der Streuscheibe 21 und dem Karosserieaußenhautteil 3 soll mit Hilfe der Ausrichtvorrichtung einstellbar sein. Dunkel hervorgehoben ist in Fig. 2 eine Lasche 4, die starr mit einem Karosserieträger verbunden oder ein integraler Bestandteil davon ist, so daß die Lasche 4 einen karosseriefesten Bezugspunkt darstellt. Bei dem Karosserieträger kann es sich beispielsweise um den vorderen Vorbauquerträger einer Kraftfahrzeugrohbaukarosserie handeln.

Das Scheinwerfergehäuse 22 hat seitlich eine Bohrung 221, in die eine Buchse 5 fest eingesetzt ist. Die Buchse 5 ist selbst ebenfalls mit einer Bohrung versehen, die koaxial zur Bohrung 221 verläuft und ein Innengewinde 51 hat. Vorzugsweise besteht die Buchse aus Metall und das Schweinwerfergehäuse 22 aus einem Hartkunststoff. In die Bohrung der Buchse 5 ist eine Schraube 6 eingeschraubt, deren Bolzenende in ein im Scheinwerfergehäuse 22 vorgesehenes Sackloch 222 hineinreicht. Zwischen dem Kopf 61 der Schraube 6 und der zugewandten Stirnfläche der Buchse 5 sind ein hülsenförmiger Führungskörper 7 und die Lasche 4 eingespannt, die zum Durchführen des Schraubenbolzens eine Bohrung 41 hat. Vorzugsweise ist der Führungskörper 7 zweiteilig aufgebaut. Ein metallisches Innenteil 72 nimmt die durch das Verspannen der Schraube 6 entstehenden Kräfte auf, während das Außenteil 71 aus einem Hartkunststoff besteht und außenseitig mit einem Gewinde 711 versehen ist. Nach dem Verschrauben bilden folglich die Lasche 4, der Führungskörper 7, die Buchse 5 und damit der Kraftfahrzeugscheinwerfer 2 eine mit dem Karosserieträger starr verbundene Einheit.

Auf der Außenfläche des Außenteils 71 ist ein hohlzylindrischer Verstellkörper 8 aufgeschraubt, der entlang seines Umfangs eine Führungsnut 81 hat und vorzugsweise ebenfalls aus einem Hartkunststoff besteht. In diese Nut greifen Vorsprünge 31 ein, die über Verbindungsteile 32 starr mit dem Karosserieaußenhautteil 3 verbunden sind. Wird nun der Verstellkörper 8 durch Drehung auf dem festgespannten Führungskörper 7 beispielsweise in Richtung der Buchse 5 verschoben, so vollziehen die Eingriffe 31 diese axiale Bewegung mit und verstellen somit das Karosserieaußenhautteil 3 ebenfalls in diese Richtung. Als Folge davon verringert sich die Breite des Spalts 23.

Fig. 3 zeigt einen Schnitt A-A durch die Ausrichtvorrichtung nach Fig. 1. In der Mitte hebt sich der Kopf 61 der Schraube 6 vor dem Kopfende des Verstellkörpers 8 ab. Auf diesem Kopfende sind radialsymmetrisch mehrere Stege 82 angeordnet, die durch Zwischenräume 83 auf dem Umfang des Kopfendes voneinander getrennt sind. In den Fig. 2 und 3 ist zu erkennen, daß die Verbindungsteile 32 eine Art Gehäuse bilden, das das Kopfende des Verstellkörpers teilweise umschließt. Zum Verstellen des Verstellelements 8 greift man, wie in Fig. 3 dargestellt, mit einem länglichen Gegenstand 90 in eine Öffnung des Gehäuses ein und drückt gegen einen der Stege 82. Dies bewirkt die Drehung des Verstellkörpers und damit das Verstellen des Karosserieaußenhautteils 3 gegenüber dem karosseriefesten Kraftfahrzeugscheinwerfer 2.

## Patentansprüche

1. Ausrichtvorrichtung zum Einpassen eines Kraftfahrzeugscheinwerfers (2) in einen Karosserieausschnitt, der von an einem Karosserieträger (4) befestigten Karosserieaußenhautteilen (3; 3a, 3b, 3c) gebildet wird,
**dadurch gekennzeichnet, daß**
- die Ausrichtvorrichtung erste Mittel (5, 6) zum starren Befestigen des Kraftfahrzeugscheinwerfers an dem Karosserieträger und
- zweite Mittel (7, 8) zum Ausrichten wenigstens eines Karosserieaußenhautteils (3) gegenüber dem Karosserieträger umfaßt.

2. Ausrichtvorrichtung nach Anspruch 1,
**dadurch gekennzeichnet, daß**
die zweiten Mittel einen karosseriefesten Führungskörper (7) und einen darauf aufgeschraubten hohlzylindrischen Verstellkörper (8) umfassen, wobei dem Verstellkörper Führungsmittel (81, 31) zugeordnet sind, die eine aus einem Verdrehen des Verstellkörpers auf dem Führungskörper resultierende Axialbewegung des Verstellkörpers auf das wenigstens eine Karosserieaußenhautteil (3) übertragen.

3. Ausrichtvorrichtung nach Anspruch 2,
**dadurch gekennzeichnet, daß**
die Führungsmittel eine auf dem Umfang des Verstellkörpers umlaufende Nut (81) und einen Vorsprung (31) umfassen, der in die Nut eingreift und starr mit dem wenigstens einen Karosserieaußenhautteil verbunden ist.

4. Ausrichtvorrichtung nach einem der Ansprüche 2 oder 3,
**dadurch gekennzeichnet, daß**
der Verstellkörper auf seinem Umfang mit radial nach außen weisenden Stegen (82) versehen ist.

5. Ausrichtvorrichtung nach einem der Ansprüche 2 bis 4,
**dadurch gekennzeichnet, daß**
die ersten Mittel eine mit dem Gehäuse (22) des Kraftfahrzeugscheinwerfers (2) starr verbundene Buchse (5) und eine darin eingeschraubte Schraube (6) umfassen, wobei zwischen dem Kopf (61) der Schraube und der zugewandten Stirnseite der Buchse der Führungskörper (7) und ein karosseriefestes Teil (4) eingespannt ist.

6. Ausrichtvorrichtung nach Anspruch 5,
**dadurch gekennzeichnet, daß**
der Führungskörper (7) ein aus einem Metall bestehendes Innenteil (72) und ein aus einem Kunststoff bestehendes Außenteil (71) umfaßt.

7. Kraftfahrzeug mit mindestens einen Scheinwerfer,
**dadurch gekennzeichnet, daß**
zwei Karosserieaußenhautteile (3a, 3b) im Bereich des Kraftfahrzeugscheinwerfers (2) so miteinander verbunden sind, daß sie gemeinsam mit genau einer Ausrichtvorrichtung nach einem der vorhergehenden Ansprüche ausrichtbar sind.

## Claims

1. Alignment mechanism for fitting a vehicle headlamp (2) in a bodywork cut-out formed by bodywork outer skin parts (3; 3a, 3b, 3c) secured to a body support member (4),
**characterised in that**
- the alignment mechanism comprises first means (5, 6) for rigidly securing the vehicle headlamp to the body support member and
- second means (7, 8) for aligning at least one bodywork outer skin part (3) relative to the body support member.

2. Alignment mechanism as claimed in claim 1,
**characterised in that**
the second means comprise a guide element (7) permanently fixed to the body and a hollow cylindrical adjusting element (8) screwed thereon, the adjusting element being provided with guide means (81, 31) which transmit an axial motion of the adjusting element, resulting when the adjusting element is turned on the guide element, to the at least one bodywork outer skin part (3).

3. Alignment mechanism as claimed in claim 2,
**characterised in that**
the guide means comprise a groove (81) extending around the circumference of the adjusting element and a projection (31) which locates in the groove and is rigidly connected to the at least one bodywork outer skin part.

4. Alignment mechanism as claimed in one of claims 2 or 3,
**characterised in that**
the adjusting element is provided with webs (82) on its periphery, pointing radially outwards.

5. Alignment mechanism as claimed in one of claims 2 to 4,
**characterised in that**
the first means comprise a bush (5) rigidly joined to the housing (22) of the vehicle headlamp (2) and a screw (6) screwed therein, and the guide element (7) and a part (4) permanently fixed to the bodywork are clamped between the head (61) of the screw and the facing end face of the bush.

6. Alignment mechanism as claimed in claim 5,
**characterised in that**
the guide element (7) comprises an inner part (72) made from a metal and an outer part (71) made forma plastic.

7. Motor vehicle with at least one headlamp,
**characterised in that**
two bodywork outer skin parts (3a, 3b) are joined to one another in the region of the vehicle headlamp (2) so that they can be jointly aligned by means of an alignment mechanism as claimed in one of the preceding claims.

## Revendications

1. Dispositif de positionnement d'un phare (2) dans une ouverture de la carrosserie d'un véhicule, formée par des éléments (3, 3a, 3b, 3c) de la couverture extérieure de la carrosserie fixés sur un support de carrosserie (4), **caractérisé en ce que**
- le dispositif de positionnement comprend des premiers moyens (5, 6) destinés à la fixation rigide du phare du véhicule sur le support de la carrosserie et
- des seconds moyens (7, 8) destinés à l'alignement au moins d'un élément (3) de la couverture extérieure de la carrosserie en face du support de la carrosserie.

2. Dispositif de positionnement selon la revendication 1, **caractérisé en ce que** les seconds moyens comprennent un corps de guidage (7) monté à demeure sur la carrosserie et un corps de réglage (8) en forme de cylindre creux vissé sur celui-ci, des moyens de guidage (81, 31) étant affectés au corps de réglage, lesquels transmettent un mouvement axial du corps de réglage à un élément (3) de la couverture extérieure au moins de la carrosserie, mouvement axial résultant de la rotation du corps de réglage sur le corps de guidage.

3. Dispositif de positionnement selon la revendication 2, **caractérisé en ce que** les éléments de guidage comprennent une rainure (81) prévue sur la périphérie du corps de réglage et un épaulement (31) venant en prise dans la rainure et fixé de manière rigide à l'élément de la couverture extérieure de la carrosserie au moins.

4. Dispositif de positionnement selon l'une quelconque des revendications 2 ou 3, **caractérisé en ce que** le corps de réglage comporte sur sa périphérie des entretoises (82) dirigées de manière radiale vers l'extérieur.

5. Dispositif de positionnement selon l'une quelconque des revendications 2 à 4, **caractérisé en ce que** les premiers moyens comprennent une douille (5) reliée de manière rigide au corps (22) du phare (2) du véhicule et une vis (6) vissée à l'intérieur de la douille, le corps de guidage (7) et un élément (4) fixé à demeure sur la carrosserie étant serrés entre la tête (61) de la vis et le côté de devant de la douille se trouvant en face.

6. Dispositif de positionnement selon la revendication 5, **caractérisé en ce que** le corps de guidage (7) comprend un élément intérieur (72) confectionné en un métal et un élément extérieur (71) confectionné en une matière synthétique.

7. Véhicule comprenant un phare au moins, **caractérisé en ce que** deux éléments (3a, 3b) de la couverture extérieure de la carrosserie au niveau du phare (2) du véhicule sont reliés entre eux de sorte qu'ils sont susceptibles d'être alignés en commun à l'aide un seul dispositif de positionnement selon l'une quelconque des revendications précédentes.
